# EUROPEAN PATENT APPLICATION

(11) **EP 4 517 672 A1**
(43) Date of publication of application: **05.03.2025**
(21) Application number: 24176970.2
(22) Date of filing: 21.05.2024
(51) Int. Cl.: G06T 13/40

(54) **AUTOMATIC CREATION OF ANIMATED HAIR IN VIRTUAL REALITY**

(30) Priority: 30.08.2023 US 202318458749
(71) Applicant: Meta Platforms Technologies, LLC, Menlo Park, CA 94025 (US)
(72) Inventor: Vatelmacher, Moran, Menlo Park (US); Shenkman, Yigal Reuven, Menlo Park (US); Shlomo, Bat El, Menlo Park (US); Bluvshtein, Maxim, Menlo Park (US)
(74) Representative: Murgitroyd & Company

(57) **Abstract**

Various aspects of the subject technology relate to systems, methods, and machine-readable media for creation of animated virtual hair in a shared artificial reality environment. Various aspects may include creating a first stylistic hair mesh based on an inflation of a first virtual hair strand. Aspects may also include creating a second stylistic hair mesh based on an inflation of a second virtual hair strand. Aspects may also include calculating skinning weights for the first stylistic hair mesh and the second stylistic hair mesh. Aspects may also include combining the first stylistic hair mesh and the second stylistic hair mesh to a united single hair mesh based on the skinning weights. Aspects may include determining a movement parameter of the first virtual hair strand and the second virtual hair strand to animate the united single hair mesh.

## Description

### TECHNICAL FIELD

The present disclosure generally relates to virtual hair animation in computer generated shared artificial reality environments, and more particularly to automatically creating animation of virtual hair in such environments according to computational models of physics.

### BACKGROUND

Interaction in a computer generated shared artificial reality environment involves interaction with various types of artificial reality/virtual content, elements, and/or applications in the shared artificial reality environment. Users of the shared artificial reality environment may interact with other users based on corresponding user representations in the shared artificial reality environment, such as avatars. In the artificial reality environment, computer graphics techniques enable creation of virtual objects, including virtual humans with realistic virtual hair, for use as such user representations. Hair animation in virtual reality is important for creating immersive environments and realistic characters. However, creating detailed hair animation can be computationally intensive and it may be difficult to quickly animate movement of stylized hair in the artificial reality environment. It may be beneficial to automatically create animatable stylistic virtual hair assets from just a few hair strands so as to reduce the computer processing cost and time associated with rendering virtual hair movement in the shared artificial reality environment.

### SUMMARY

The subject disclosure provides systems and methods for high performance animated stylized virtual hair assets in a shared artificial reality environment (e.g., shared virtual reality environment). In particular, automatic creation of a hair mesh from a few virtual hair strands may enable computationally quick and efficient stylistic animation of virtual hair assets. By animating the hair mesh created from the virtual hair strands, the animated virtual hair assets may advantageously be animated in high detail and quality without incurring the cost of individually animating every single particle in the virtual hair assets. The animated hair mesh can be created from a sampled small quantity of hair strands in an iterative process. The small quantity of hair strands may interact with non-sampled hair strands in a master slave relationship. That is, the small quantity of hair strands may be leading or driving hairs to which slave hair strands are attached so that stylistic animation of the animated virtual hair assets can be achieved with less complexity than application of conventional methods. Conventionally, stylistic virtual hair assets are hair meshes that are not composed of strands, which causes highly detailed animation to be more challenging.

Because highly detailed virtual hair meshes typically comprise a significant quantity of particles to move, stylistic virtual hair movement may be computationally challenging, inefficient, and/or expensive to animate. The subject disclosure advantageously provides a methodology for automatic creation of stylistic virtual hair assets from just a few strands of virtual hair strands in a more computationally efficient and improved manner. In particular, the methodology includes looping through each of a selection of single virtual hair strands. The iterative loop involves inflating each selected hair strand individually to create a virtual hair mesh for each strand. The iterative loop also involves calculating skinning weights for each mesh to its corresponding single strand based on the distance of its corresponding vertices (e.g., control points that influence the deformation of the hair mesh when it moves or is posed). By looping over or repeating these steps for all selected hair strands, the corresponding created individual meshes can be united or combined to a single mesh while preserving the skinning weights. Preservation of the skinning weights beneficially can automatically ensure that areas of the single mesh are skinned to only a single strand such that they are not undesirably stretched by multiple hair strands moving in different directions.

In this way, the subject disclosure achieves an improved way of generating high quality stylized virtual hair movement animated for high resolution virtual hair assets. The disclosed automatic creation of animated high quality stylistic virtual hair assets advantageously removes the need for an artist to manually create a custom stylized hair mesh. Rather than manual creation of a skeleton for the custom hair mesh and calculation of corresponding skinning weights, the subject disclosure enables an automatic, faster, and more efficient way of generating animated stylistic virtual hair assets. The generated hair assets are animated realistically based on its constituent virtual hair strands (and united hair mesh) being moved according to the principles of physics represented by a computational model. Accordingly, the subject disclosure enables graphical rendering of stylized hair movement in the artificial reality environment in an automatic and computationally efficient manner.

According to According to a first aspect, there is provided a computer-implemented method for creation of animated virtual hair in a shared artificial reality environment, the method comprising: creating a first stylistic hair mesh based on an inflation of a first virtual hair strand; creating a second stylistic hair mesh based on an inflation of a second virtual hair strand; calculating skinning weights for the first stylistic hair mesh and the second stylistic hair mesh; combining, based on the skinning weights, the first stylistic hair mesh and the second stylistic hair mesh to a united single hair mesh; and determining a movement parameter of the first virtual hair strand and the second virtual hair strand to animate the united single hair mesh.

Creating the first stylistic hair mesh may comprise creating an inflated volume that is positioned to surround the first stylistic hair mesh.

Creating the second stylistic hair mesh may comprise determining a quantity of sampled virtual hair strands according to a volume of a virtual head.

Calculating the skinning weights may comprise determining a one to one relationship between each of the first virtual hair strand and the second virtual hair strand and each corresponding vertex.

Calculating the skinning weights may comprise: calculating Euclidean distances corresponding to the first stylistic hair mesh and the second stylistic hair mesh; and determining a distance of vertices for the first stylistic hair mesh and the second stylistic hair mesh.

Determining the movement parameter may comprise calculating an extent of movement of the first virtual hair strand and the second virtual hair strand based on the skinning weights.

Determining the movement parameter may comprise: determining training data comprising a plurality of physics based virtual hair movements; and applying a machine learning algorithm based on the training data for animation of the united single hair mesh.

The animated virtual hair may be represented as a subset of physical particles according to a physics model.

The computer-implemented method may further comprise: sampling a first virtual hair strand and a second virtual hair strand from a virtual hair asset; and inflating the first virtual hair strand and the second virtual hair strand based on a volume of a virtual head.

The computer-implemented method may further comprise preserving the skinning weights for the first stylistic hair mesh and the second stylistic hair mesh for animation of the united single hair mesh.

According to a second aspect, there is provided a system for creation of animated virtual hair in a shared artificial reality environment, comprising: one or more processors; and a memory comprising instructions stored thereon, which when executed by the one or more processors, causes the one or more processors to perform the method of the first aspect.

According to a third aspect, there is provided a computer-readable storage medium comprising instructions stored thereon, which when executed by one or more processors, cause the one or more processors to perform the method of the first aspect. The medium may be non-transitory.

According to a fourth aspect, there is provided a computer program product comprising instructions which, when the program is executed by a computer, cause the computer to perform the method of the first aspect.

### BRIEF DESCRIPTION OF THE DRAWINGS

To easily identify the discussion of any particular element or act, the most significant digit or digits in a reference number refer to the figure number in which that element is first introduced.
FIG. 1 is a block diagram of a device operating environment with which aspects of the subject technology can be implemented.
FIGS. 2A-2B are diagrams illustrating extended reality headsets, according to certain aspects of the present disclosure.
FIG. 2C illustrates extended reality controllers for interaction with an artificial reality environment, according to certain aspects of the present disclosure.
FIG. 3 is a block diagram illustrating an overview of an environment in which some implementations of the present technology can operate.
FIG. 4 illustrates an example extended reality wearable, according to certain aspects of the present disclosure.
FIG. 5 is a block diagram illustrating an example computer system with which aspects of the subject technology can be implemented.
FIG. 6 is a visual rendering illustrating an example virtual animated hair asset with which aspects of the subject technology can be implemented.
FIG. 7 is another visual rendering illustrating inflated virtual hair strands for the example virtual animated hair asset, according to certain aspects of the present disclosure.
FIG. 8 is an example flow diagram for automatic creation of animated stylized virtual hair assets in a shared artificial reality environment, according to certain aspects of the present disclosure.
FIG. 9 is a block diagram illustrating an example computer system with which aspects of the subject technology can be implemented.

In one or more implementations, not all of the depicted components in each figure may be required, and one or more implementations may include additional components not shown in a figure. Variations in the arrangement and type of the components may be made without departing from the scope of the subject disclosure. Additional components, different components, or fewer components may be utilized within the scope of the subject disclosure.

### DETAILED DESCRIPTION

In the following detailed description, numerous specific details are set forth to provide a full understanding of the present disclosure. It will be apparent, however, to one ordinarily skilled in the art, that the embodiments of the present disclosure may be practiced without some of these specific details. In other instances, well-known structures and techniques have not been shown in detail so as not to obscure the disclosure.

The disclosed system addresses a problem in artificial reality tied to computer technology, namely, the technical problem of creating animatable stylistic virtual hair meshes that satisfy the computational efficiency and speed requirements of a computer generated shared artificial reality environment. The computer processing required for automatically creating such highly detailed hair meshes that fulfills both image quality and computational efficiency requirements can be challenging. The disclosed system solves this technical problem by providing a solution also rooted in computer technology, namely, by providing an approach for automatically creating high resolution virtual hair assets that support stylistic and fast virtual hair movement in artificial reality from a limited set of artist rendered virtual hair strands or sampled hair strands. This disclosed technical solution addresses the complexity of conventional highly detailed virtual hair meshes that comprise many constituent particles that pose a challenge to animating fast stylized hair movement. In particular, the disclosed solution bypasses the time intensive manual creation of such a virtual hair mesh by enabling automatic conversion of a few hair strands from an artist created virtual hair mesh or from sampled high resolution virtual hair assets into animatable stylistic virtual hair.

The disclosed system improves the functioning of the computer system used to generate the artificial reality environment and the artificial reality compatible devices used to connect to the environment. For example, such devices may include head mounted devices as described herein in which users may visually perceive the environment rendered in head mounted devices as virtual user representations. Such virtual user representations may be embodied as virtual humans or other objects that have hair which be arranged according to different hairstyles such as straight, wavy, curly, pixie, bob, braided, ponytailed, and the like. Various hairstyles may correspond to different stylized or stylistic hair movement. Accordingly, the automatically created animatable stylistic virtual hair meshes of the subject disclosure can simulate movement for the desired hair appearance and style in the perceived environment. In particular, the animated hair movement of the virtual user representations can be based on automatic calculation of skinning weights for animating such stylistic hair movement via the virtual hair mesh that becomes a hair skeleton. For more flexibility in animated hair movement, additional particles or hair skeleton matter should be added. As such, the disclosed system improves visual rendering and computation efficiency between the servers hosting the artificial reality environment and the artificial reality compatible devices. In this way, the present invention is integrated into a practical application of providing an automatic approach for stylistic hair movement of user representations in artificial reality environments.

Aspects of the present disclosure are directed to creating and administering artificial reality environments. For example, an artificial reality environment may be a shared artificial reality environment, a virtual reality (VR), an augmented reality (AR) environment, a mixed reality (MR) environment, a hybrid reality environment, a non immersive environment, a semi immersive environment, a fully immersive environment, and/or the like. The artificial environments may also include artificial collaborative gaming, working, and/or other environments which include modes for interaction between various people, users, or user representations in the artificial environments. The artificial environments may enable animation of the user representations, such as animating detailed stylized hair movement according to a desired virtual hair style of the corresponding user. As used herein, "real-world" objects are non-computer generated and artificial or VR objects are computer generated. For example, a real-world space is a physical space occupying a location outside a computer and a real-world object is a physical object having physical properties outside a computer. For example, an artificial or VR object may be rendered and part of a computer generated artificial environment.

Embodiments of the disclosed technology may include or be implemented in conjunction with an artificial reality system. Artificial reality, extended reality, or extra reality (collectively "XR") is a form of reality that has been adjusted in some manner before presentation to a user, which may include, e.g., virtual reality (VR), augmented reality (AR), mixed reality (MR), hybrid reality, or some combination and/or derivatives thereof. Artificial reality content may include completely generated content or generated content combined with captured content (e.g., real-world photographs). The artificial reality content may include video, audio, haptic feedback, or some combination thereof, any of which may be presented in a single channel or in multiple channels. Additionally, in some implementations, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, glasses, a wrist device, a mobile device or computing system, a "cave" environment or other projection system, or any other hardware platform capable of providing artificial reality content to one or more viewers.

"Virtual reality" or "VR," as used herein, refers to an immersive experience where a user's visual input is controlled by a computing system. "Augmented reality" or "AR" refers to systems where a user views images of the real world after they have passed through a computing system. For example, a tablet with a camera on the back can capture images of the real world and then display the images on the screen on the opposite side of the tablet from the camera. The tablet can process and adjust or "augment" the images as they pass through the system, such as by adding virtual objects. AR also refers to systems where light entering a users' eye is partially generated by a computing system and partially composes light reflected off objects in the real world. For example, an AR headset could be shaped as a pair of glasses with a pass-through display, which allows light from the real world to pass through a waveguide that simultaneously emits light from a projector in the AR headset, allowing the AR headset to present virtual objects intermixed with the real objects the user can see. The AR headset may be a block-light headset with video pass-through. "Artificial reality," "extra reality," or "XR," as used herein, refers to any of VR, AR, MR, or any combination or hybrid thereof.

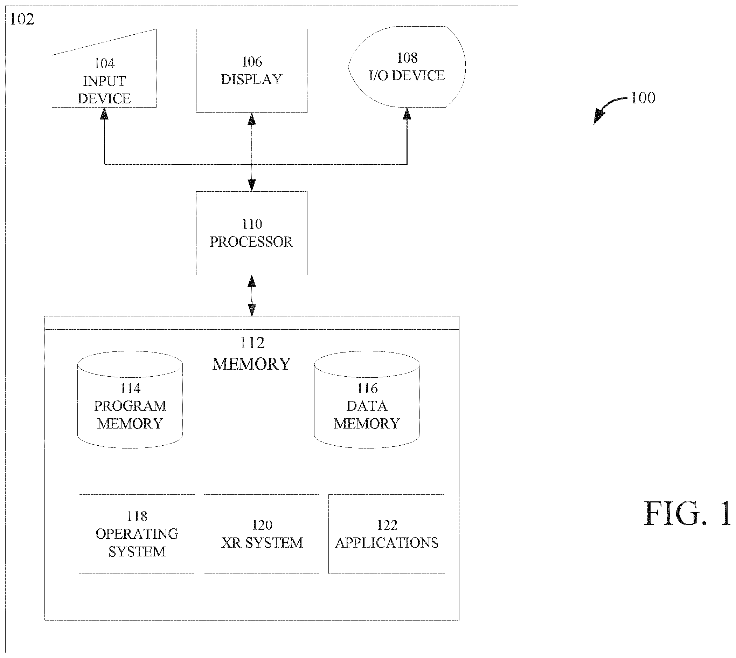

Several implementations are discussed below in more detail in reference to the figures. FIG. 1 is a block diagram of a device operating environment 100 with which aspects of the subject technology can be implemented. The device operating environment can comprise hardware components of a computing system 100 that can create, animate, render, and otherwise control virtual hair movement and general animation of virtual objects for a shared artificial reality environment (e.g., collaborative artificial reality environment) such as for animating stylistic/stylized virtual hair asset movement. The animation can be based on automatically skinning a stylistic hair skeleton to a 3D animation rig for stylized hair movement animation of the corresponding stylistic hair mesh. In various implementations, the computing system 100 can include a single computing device or multiple computing devices 102 that communicate over wired or wireless channels to distribute processing and share input data.

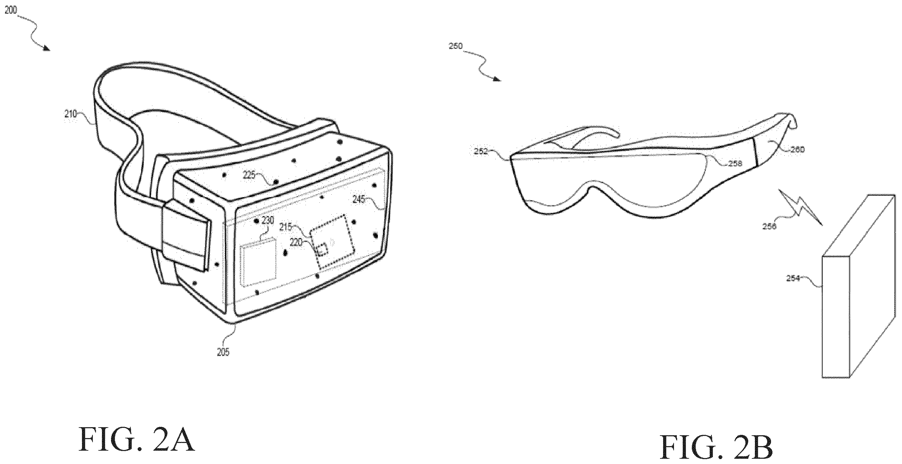

In some implementations, the computing system 100 can include a stand-alone headset capable of providing a computer created or augmented experience for a user without the need for external processing or sensors. In other implementations, the computing system 100 can include multiple computing devices 102 such as a headset and a core processing component (such as a console, mobile device, or server system) where some processing operations are performed on the headset and others are offloaded to the core processing component. Example headsets are described below in relation to FIGS. 2A-2B. In some implementations, position and environment data can be gathered only by sensors incorporated in the headset device, while in other implementations one or more of the non-headset computing devices 102 can include sensor components that can track environment or position data, such as for implementing computer vision functionality. For example, the sensors may include inertial measurement units (IMUs), eye tracking sensors, electromyography (e.g., for translating neuromuscular signals to specific gestures), time of flight sensors, light/optical sensors, and/or the like.

The computing system 100 can include one or more processor(s) 110 (e.g., central processing units (CPUs), graphical processing units (GPUs), holographic processing units (HPUs), etc.). The processors 110 can be a single processing unit or multiple processing units in a device or distributed across multiple devices (e.g., distributed across two or more of computing device 102s). The computing system 100 can include one or more input devices 104 that provide input to the processors 110, notifying them of actions. The actions can be mediated by a hardware controller that interprets the signals received from the input device 104 and communicates the information to the processors 110 using a communication protocol. As an example, the hardware controller can translate signals from the input devices 104 to simulate navigation in the artificial reality environment. Each input device 104 can include, for example, a mouse, a keyboard, a touchscreen, a touchpad, a wearable input device (e.g., a haptics glove, a bracelet, a ring, an earring, a necklace, a watch, etc.), a camera (or other light-based input device, e.g., an infrared sensor), a microphone, and/or other user input devices.

The processors 110 can be coupled to other hardware devices, for example, with the use of an internal or external bus, such as a PCI bus, SCSI bus, wireless connection, and/or the like. The processors 110 can communicate with a hardware controller for devices, such as for a display 106. The display 106 can be used to display text and graphics. In some implementations, the display 106 includes the input device as part of the display, such as when the input device is a touchscreen or is equipped with an eye direction monitoring system. In some implementations, the display is separate from the input device. Examples of display devices are: an LCD display screen, an LED display screen, a projected, holographic, or augmented reality display (such as a heads-up display device or a head-mounted device), and/or the like. Other I/O devices 108 can also be coupled to the processor, such as a network chip or card, video chip or card, audio chip or card, USB, firewire or other external device, camera, printer, speakers, CD-ROM drive, DVD drive, disk drive, etc.

The computing system 100 can include a communication device capable of communicating wirelessly or wire-based with other local computing devices 102 or a network node. The communication device can communicate with another device or a server through a network using, for example, TCP/IP protocols. The computing system 100 can utilize the communication device to distribute operations across multiple network devices. For example, the communication device can function as a communication module. The communication device can be configured to transmit or receive input gestures for determining navigation commands in XR environments or for XR objects. The communication device may also use input gestures to determine various types of user representation interaction with XR objects having stereoscopic textures applied to their constituent surfaces. Such XR objects can be rendered as objects in an XR museum within the artificial reality environment, for example. As an example, such XR objects may appear as 3D sculptures to a given user representation standing in front of them but appear as 2D flat images from a close or sided vantage point.

The processors 110 can have access to a memory 112, which can be contained on one of the computing devices 102 of computing system 100 or can be distributed across one of the multiple computing devices 102 of computing system 100 or other external devices. A memory includes one or more hardware devices for volatile or non-volatile storage, and can include both read-only and writable memory. For example, a memory can include one or more of random access memory (RAM), various caches, CPU registers, read-only memory (ROM), and writable non-volatile memory, such as flash memory, hard drives, floppy disks, CDs, DVDs, magnetic storage devices, tape drives, and so forth. A memory is not a propagating signal divorced from underlying hardware; a memory is thus non-transitory. The memory 112 can include program memory 114 that stores programs and software, such as an operating system 118, XR enterprise system 120, and other application programs 122 (e.g., XR games). The memory 112 can also include data memory 116 that can include information to be provided to the program memory 114 or any element of the computing system 100.

Some implementations can be operational with numerous other computing system environments or configurations. Examples of computing systems, environments, and/or configurations that may be suitable for use with the technology include, but are not limited to, XR headsets, personal computers, server computers, handheld or laptop devices, cellular telephones, wearable electronics, gaming consoles, tablet devices, multiprocessor systems, microprocessor-based systems, set-top boxes, programmable consumer electronics, network PCs, minicomputers, mainframe computers, distributed computing environments that include any of the above systems or devices, and/or the like.

FIGS. 2A-2B are diagrams illustrating virtual reality headsets, according to certain aspects of the present disclosure. FIG. 2A is a diagram of a virtual reality head-mounted display (HMD) 200. The HMD 200 includes a front rigid body 205 and a band 210. The front rigid body 205 includes one or more electronic display elements such as an electronic display 245, an inertial motion unit (IMU) 215, one or more position sensors 220, locators 225, and one or more compute units 230. The position sensors 220, the IMU 215, and compute units 230 may be internal to the HMD 200 and may not be visible to the user. In various implementations, the IMU 215, position sensors 220, and locators 225 can track movement and location of the HMD 200 in the real world and in a virtual environment in three degrees of freedom (3DoF), six degrees of freedom (6DoF), etc. For example, the locators 225 can emit infrared light beams which create light points on real objects around the HMD 200. As another example, the IMU 215 can include, e.g., one or more accelerometers, gyroscopes, magnetometers, other non-camera-based position, force, or orientation sensors, or combinations thereof. One or more cameras (not shown) integrated with the HMD 200 can detect the light points, such as for a computer vision algorithm or module. The compute units 230 in the HMD 200 can use the detected light points to extrapolate position and movement of the HMD 200 as well as to identify the shape and position of the real objects surrounding the HMD 200.

The electronic display 245 can be integrated with the front rigid body 205 and can provide image light to a user as dictated by the compute units 230. In various examples, the electronic display 245 can be a single electronic display or multiple electronic displays (e.g., a display for each user eye). Examples of the electronic display 245 include: a liquid crystal display (LCD), an organic light-emitting diode (OLED) display, an active-matrix organic light-emitting diode display (AMOLED), a display including one or more quantum dot light-emitting diode (QOLED) sub-pixels, a projector unit (e.g., microLED, LASER, etc.), some other display, or some combination thereof.

In some implementations, the HMD 200 can be coupled to a core processing component such as a personal computer (PC) (not shown) and/or one or more external sensors (not shown). The external sensors can monitor the HMD 200 (e.g., via light emitted from the HMD 200) which the PC can use, in combination with output from the IMU 215 and position sensors 220, to determine the location and movement of the HMD 200.

FIG. 2B is a diagram of a mixed reality HMD system 250 which includes a mixed reality HMD 252 and a core processing component 254. The mixed reality HMD 252 and the core processing component 254 can communicate via a wireless connection (e.g., a 60 GHz link) as indicated by the link 256. In other implementations, the mixed reality system 250 includes a headset only, without an external compute device or includes other wired or wireless connections between the mixed reality HMD 252 and the core processing component 254. The mixed reality system 250 may also include a wrist wearable or partnered mobile device (e.g., smart phone), such as for converting wrist input gestures or other user commands into navigation commands for movement and interaction in AR/MR environments. The mixed reality HMD 252 includes a pass-through display 258 and a frame 260. The frame 260 can house various electronic components (not shown) such as light projectors (e.g., LASERs, LEDs, etc.), cameras, eye-tracking sensors, MEMS components, networking components, etc. The electronic components may be configured to implement computing vision-based user tracking for determining AR/MR navigation or selection commands.

The projectors can be coupled to the pass-through display 258, e.g., via optical elements, to display media to a user. The optical elements can include one or more waveguide assemblies, reflectors, lenses, mirrors, collimators, gratings, etc., for directing light from the projectors to a user's eye. Image data can be transmitted from the core processing component 254 via link 256 to HMD 252. Controllers in the HMD 252 can convert the image data into light pulses from the projectors, which can be transmitted via the optical elements as output light to the users' eye. The output light can mix with light that passes through the display 258, allowing the output light to present virtual objects that appear as if they exist in the real world. Similarly to the HMD 200, the HMD system 250 can also include motion and position tracking units, cameras, light sources, etc., which allow the HMD system 250 to, e.g., track itself in 3DoF or 6DoF, track portions of the user (e.g., hands, feet, head, or other body parts), map virtual objects to appear as stationary as the HMD 252 moves, and have virtual objects react to gestures and other real-world objects.

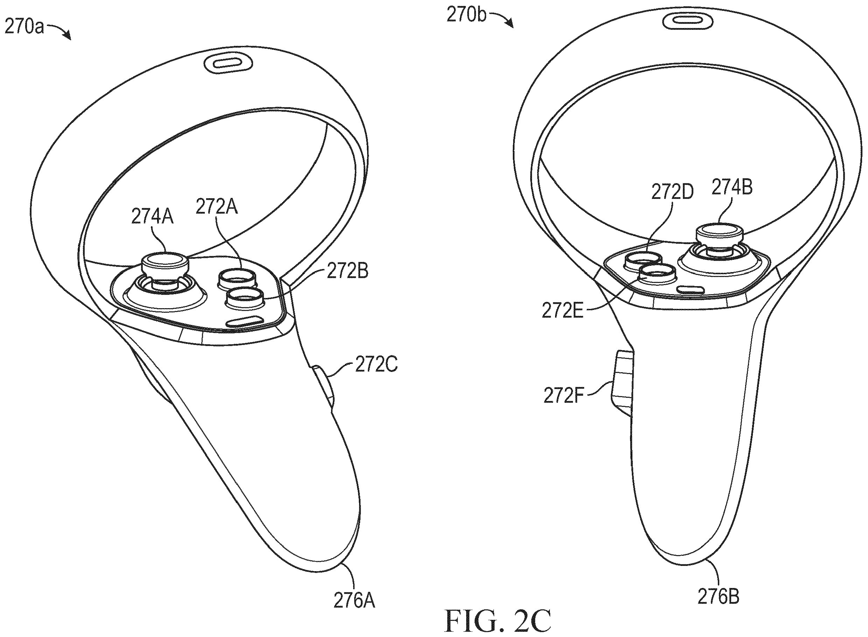

FIG. 2C illustrates controllers 270a-270b, which, in some implementations, a user can hold in one or both hands to interact with an artificial reality environment presented by the HMD 200 and/or HMD 250. The controllers 270a-270b can be in communication with the HMDs, either directly or via an external device (e.g., core processing component 254). The controllers 270a-270b can have their own IMU units, position sensors, and/or can emit further light points. The HMD 200 or 250, external sensors, or sensors in the controllers 270a-270b can track these controller light points to determine the controller positions and/or orientations (e.g., to track the controllers in 3DoF or 6DoF). The compute units 230 in the HMD 200 or the core processing component 254 can use this tracking, in combination with IMU and position output, to monitor hand positions and motions of the user. The compute units 230 may, via the IMU outputs (or other sensor outputs via the controllers 270a-270b), compute a change in position of the user's hand for defining an input gesture. The controllers 270a-270b can also include various buttons (e.g., buttons 272A-F) and/or joysticks (e.g., joysticks 274A-B), which a user can actuate to provide input and interact with objects.

The controllers 270a-270b can also have tips 276A and 276B, which, when in scribe controller mode, can be used as the tip of a writing implemented in the artificial reality environment. The controllers 270a-270b may be used to change a perception angle, for example. In various implementations, the HMD 200 or 250 can also include additional subsystems, such as a hand tracking unit, an eye tracking unit, an audio system, various network components, etc., to monitor indications of user interactions and intentions. For example, in some implementations, instead of or in addition to controllers, one or more cameras included in the HMD 200 or 250, or from external cameras, can monitor the positions and poses of the users' hands to determine gestures and other hand and body motions.

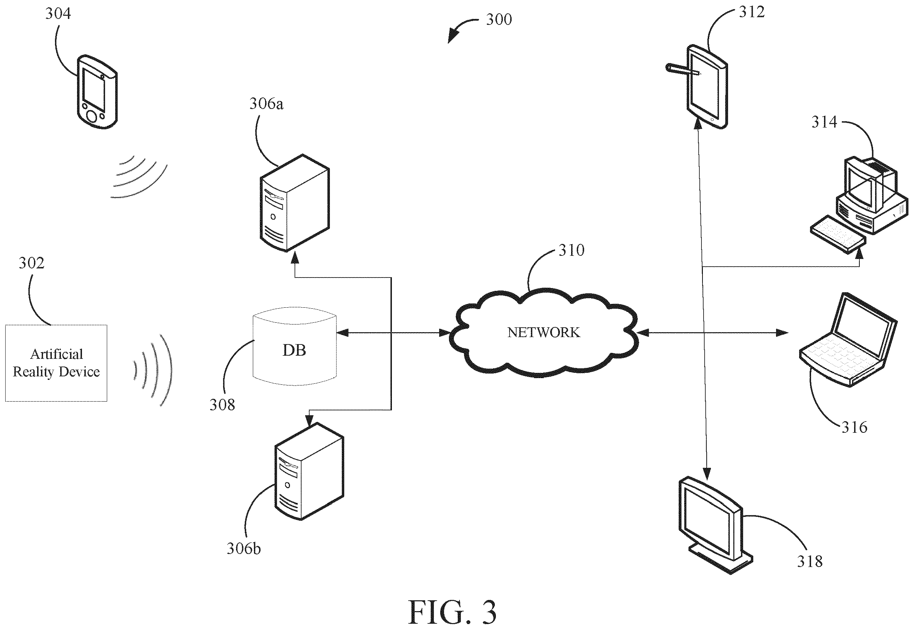

FIG. 3 is a block diagram illustrating an overview of an environment 300 in which some implementations of the disclosed technology can operate. The environment 300 can include one or more client computing devices, such as artificial reality device 302, mobile device 304, tablet 312, personal computer 314, laptop 316, desktop 318, and/or the like. The artificial reality device 302 may be the HMD 200, HMD system 250, or some other XR device that is compatible with rendering or interacting with an artificial reality or virtual reality environment. The artificial reality device 302 and mobile device 304 may communicate wirelessly via the network 310. The client computing devices can operate in a networked environment using logical connections through network 310 to one or more remote computers, such as a server computing device such as server computing devices 306a-306b. In some implementations, the environment 300 may include a server such as an edge server which receives client requests and coordinates fulfillment of those requests through other servers.

The server may include the server computing devices 306a-306b, which could also logically form a single server. Alternatively, the server computing devices 306a-306b may each be a distributed computing environment encompassing multiple computing devices located at the same or at geographically disparate physical locations. The client computing devices and server computing devices 306a-306b can each act as a server or client to other server/client device(s). The server may connect to a database 308 or can comprise its own memory. Each of the server computing devices 306a-306b can correspond to a group of servers, and each of these servers can share a database or can have their own database. The database 308 may logically form a single unit or may be part of a distributed computing environment encompassing multiple computing devices that are located within their corresponding server, located at the same, or located at geographically disparate physical locations.

The client computing devices and the server computing devices 306a-306b may be in operative communication to facilitate movement and interaction about the artificial reality environment. As an example, the client computing devices may be used to control user representations immersed within an artificial reality environment such as a VR, AR, or MR environment. Such user representations may take the form of human avatars, for example. The user representations may have virtual stylistic hair that should be animated in a stylized fashion in the artificial reality environment. As used herein, stylistic or stylized virtual hair can refer to virtual hair rendered according to different hairstyles such as straight, wavy, curly, pixie, bob, braided, ponytailed, and the like. To animate such stylistic virtual hair, virtual hair assets stored in the database 308 can be sampled according to computational capacity of the client computing devices and the server computing devices 306a-306b. For example, a virtual hair asset can be sampled for virtual hair strands sufficient to cover a virtual head of a particular user representation. The sampled virtual hair strands can each be inflated into a surrounding volume separately for creating a combined single stylistic virtual hair mesh.

The artificial reality device 302 or the server computing devices 306a-306b can calculate skinning weights to skin the combined single hair mesh to the inflated virtual hair strands (representing a hair skeleton of a 3D virtual user representation animation rig). By calculating movement of a few of the inflated virtual hair strands (e.g., master hair strands), an entire stylized hair asset can be animated stylistically according to computational physics. For example, the combined single hair mesh may move in a physically plausible fashion. The skinning weights may be used to define or control the movement of individual strands of virtual hair of the stylized hair asset (e.g., the sampled leading/driving hairs of the hair asset). Driving hairs may drive overall hair movement and be attached to slave virtual hairs whose movement is controlled by the driving hairs. As used herein, skinning weights may refer to a set of values used to determine how much influence each hair strand has on the surrounding vertices of the model. For example, hairs on the left side of the virtual head may be weighted different than hairs on the right side of the head depending on the form of the selected hair style. Advantageously, each inflated driving hair strand is skinned to a portion of the combined hair mesh in a one to one relationship. Consequently, undesirable stretching can be avoided during animation of the stylized hair asset because each vertex of the model is controlled by a single driving virtual hair strand. As such, the subject disclosure provides an improved automatic method of high quality animation of automatically created stylized virtual hair assets by the artificial reality device 302 or the server computing devices 306a-306b in an XR environment.

The network 310 can be a local area network (LAN), a wide area network (WAN), a mesh network, a hybrid network, or other wired or wireless networks. The network 310 may be the Internet or some other public or private network. Client computing devices can be connected to network 310 through a network interface, such as by wired or wireless communication. The connections can be any kind of local, wide area, wired, or wireless network, including the network 310 or a separate public or private network. In some implementations, the server computing devices 306a-306b can be used as part of a social network such as implemented via the network 310. The social network can maintain a social graph and perform various actions based on the social graph. A social graph can include a set of nodes (representing social networking system objects, also known as social objects) interconnected by edges (representing interactions, activity, or relatedness). A social networking system object can be a social networking system user, nonperson entity, content item, group, social networking system page, location, application, subject, concept representation or other social networking system object, e.g., a movie, a band, a book, etc.

A social networking system in an XR environment can enable a user to upload or create pictures, videos, documents, songs, or other content items, and can enable a user to create and schedule events, such as via XR compatible devices. Content items can be represented, in various implementations, by a node or edge between nodes in the social graph. A social networking system can enable a user to perform uploads or create content items, interact with content items or other users, express an interest or opinion, or perform other actions. A social networking system can provide various means to interact with non-user objects within the social networking system. Actions can be represented, in various implementations, by a node or edge between nodes in the social graph. Users of the XR environment can interact with other users such as via reactions, responses, sharing, and the like. Users can associate themselves and establish connections with other users of shared XR environments, such as sharing activities and locations within the environment (e.g., virtual homes or virtual art/creations in the XR environment).

In particular examples, one or more objects (e.g., content or other types of XR objects) of a computing system may be associated with one or more privacy settings. The one or more objects may be stored on or otherwise associated with any suitable computing system or application, such as, for example, a shared artificial reality system, a social-networking system, a client system, a third-party system, a social-networking application, a messaging application, a photo-sharing application, or any other suitable computing system or application. Privacy settings (or "access settings") for an object may be stored in any suitable manner, such as, for example, in association with the object, in an index on an authorization server, in another suitable manner, or any suitable combination thereof. A privacy setting for an object may specify how the object (or particular information associated with the object) can be accessed, stored, or otherwise used (e.g., viewed, shared, modified, copied, executed, surfaced, or identified) within the XR environment or social networking system. When privacy settings for an object allow a particular user or other entity to access that object, the object may be described as being "visible" with respect to that user or other entity.

In particular examples, privacy settings for an object may specify a "blocked list" of users or other entities that should not be allowed to access certain information associated with the object. In particular examples, the blocked list may include third-party entities. The blocked list may specify one or more users or entities for which an object is not visible. As an example and not by way of limitation, a user may specify a set of users who may not access photo albums associated with the user, thus excluding those users from accessing the photo albums (while also possibly allowing certain users not within the specified set of users to access the photo albums). In particular examples, privacy settings may be associated with particular social-graph elements. Privacy settings of a social-graph element, such as a node or an edge, may specify how the social-graph element, information associated with the social-graph element, or objects associated with the social-graph element can be accessed using the online social network. In particular examples, privacy settings may allow users to opt in to or opt out of having their content, information, or actions stored/logged by the social-networking system or shared with other systems (e.g., a third-party system). Although this disclosure describes using particular privacy settings in a particular manner, this disclosure contemplates using any suitable privacy settings in any suitable manner.

In particular examples, privacy settings may be based on one or more nodes or edges of a social graph. A privacy setting may be specified for one or more edges or edge-types of the social graph, or with respect to one or more nodes, or node-types of the social graph. The privacy settings applied to a particular edge connecting two nodes may control whether the relationship between the two entities corresponding to the nodes is visible to other users of the shared XR environment. Similarly, the privacy settings applied to a particular node may control whether the user or concept corresponding to the node is visible to other users of the shared XR environment. In general, users can specify and configure privacy settings to control the visibility and public nature of their activity and engagement in the shared XR environment. In particular examples, a "privacy wizard" (e.g., within a webpage, a module, one or more dialog boxes, or any other suitable interface) to a first user to assist the first user in specifying one or more privacy settings. The privacy wizard may display instructions, suitable privacyrelated information, current privacy settings, one or more input fields for accepting one or more inputs from the first user specifying a change or confirmation of privacy settings, or any suitable combination thereof.

In particular examples, the XR environment or social-networking system may offer a "dashboard" functionality to the first user that may display, to the first user, current privacy settings of the first user. The dashboard functionality may be displayed to the first user at any appropriate time (e.g., following an input from the first user summoning the dashboard functionality or the occurrence of a particular event or trigger action). The dashboard functionality may allow the first user to modify the first user's current privacy settings at any time, in any suitable manner (e.g., redirecting the first user to the privacy wizard). Privacy settings associated with an object may specify any suitable granularity of permitted access or denial of access. Although this disclosure describes particular granularities of permitted access or denial of access, this disclosure contemplates any suitable granularities of permitted access or denial of access.

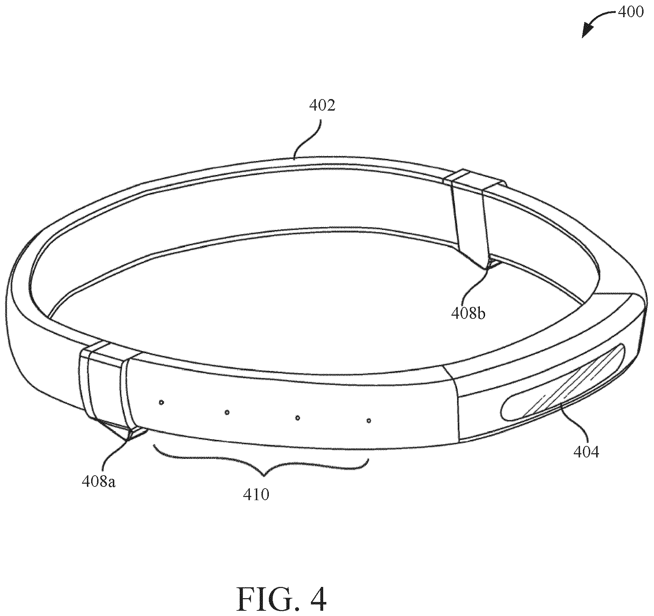

FIG. 4 illustrates an example extended reality wearable or a shared artificial reality environment, according to certain aspects of the present disclosure. For example, the artificial reality wearables can be a wrist wearable such as an XR wrist sensor 400. The wrist sensor 400 may be configured to sense position and movement of a user's hand in order to translate such sensed position and movement into input gestures. For example, input gestures can be used to control user representations such as avatars, virtual objects, and the like. A user representation controlled via the XR wrist sensor 400 can have hair, such as stylistic hair of an avatar that can be animated to show different hair movements. The hair movement of the avatar can be perceived as augmented, mixed, or virtual reality content via an XR device, such as via AR glasses, VR/MR headset, and the like. The XR wrist sensor 400 may generally represent a wearable device dimensioned to fit about a body part (e.g., a wrist) of the user. As shown in FIG. 4, the XR wrist sensor 400 may include a frame 402 and a sensor assembly 404 that is coupled to frame 402 and configured to gather information about a local environment by observing the local environment.

The sensor assembly 404 can include cameras, IMU eye tracking sensors, electromyography (EMG) sensors, time of flight sensors, light/optical sensors, and/or the like to track wrist movement. The XR wrist sensor 400 may also include one or more audio devices, such as output audio transducers 408a-408b and input audio transducers 410. The output audio transducers 408a-408b may provide audio feedback and/or content to the user while the input audio transducers 410 may capture audio in the user's environment. The XR wrist sensor 400 may also include other types of screens or visual feedback devices (e.g., a display screen integrated into a side of frame 402). In some examples, the wrist wearable 400 can instead take another form, such as head bands, hats, hair bands, belts, watches, ankle bands, rings, neckbands, necklaces, chest bands, eyewear frames, and/or any other suitable type or form of apparatus. Other forms of the XR wrist sensor 400 may be different wrist bands with a different ornamental appearance than the XR wrist sensor 400 but perform a similar function.

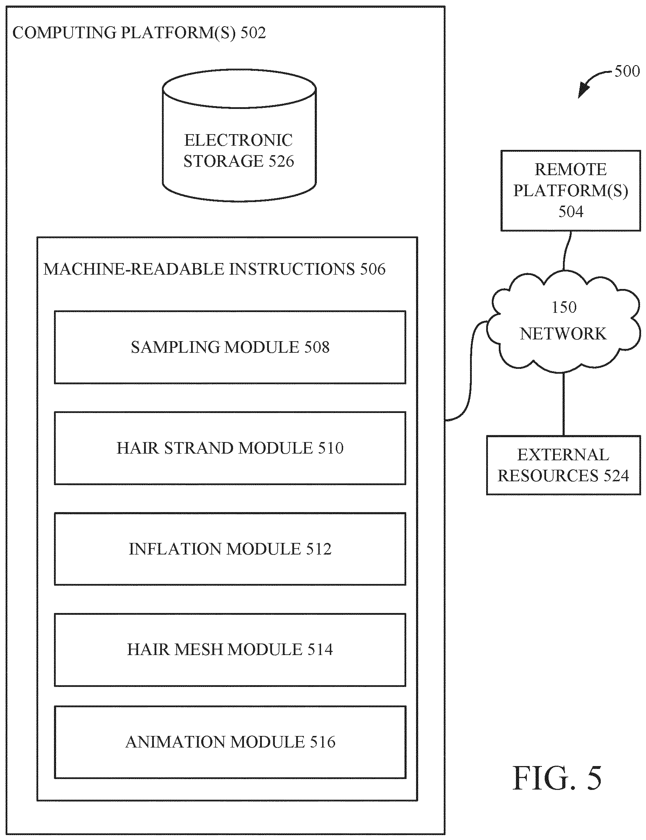

FIG. 5 is a block diagram illustrating an example computer system 500 with which aspects of the subject technology can be implemented. The system 500 may be configured for providing a shared artificial reality/XR environment to XR compatible devices such as represented by the remote platform(s) 504, according to certain aspects of the disclosure. In some implementations, the system 500 may include one or more computing platforms 502. The computing platform(s) 502 can correspond to a server component of an artificial reality/XR platform or other communication platform, which can be similar to or the same as the server computing devices 306a-306b of FIG. 3 and include the processor 110 of FIG. 1. The computing platform(s) 502 can render the shared XR environment according to user preferences, for example. The computing platform(s) 502 can be configured to store, render, modify, and/or otherwise control user representations, animation, and/or XR elements in the environment. For example, the computing platform(s) 502 may be configured to animate virtual stylistic hair assets of various user representations according to the selected corresponding hair style based on automatic creation of a hair mesh from a few hair strands. For example, resulting virtual stylistic hair assets may move in a physically plausible fashion as the driving strands are driven with a physically-based simulation (e.g., with a computational physics engine).

The computing platform(s) 502 can maintain or store virtual hair assets and animations, such as in the electronic storage 526, including virtual hair strands, skeletons, meshes, and 3D animation rigs used by the computing platform(s) 502 to determine how to automatically create animatable stylistic/stylized virtual hair assets. As an example, the computing platform(s) 502 can use sampled and inflated hair strands as leading/driving hair strands to automatically create virtual hair assets that can be animated with stylistic hair movement in high resolution. The high quality stylistic hair movement can be rendered by the computing platform(s) 502 according to applicable principles of physics (e.g., based on a computational model of physics). As discussed herein, skinning corresponding hair skeletons to hair meshes of such virtual hair assets enables the respective 3D animation right to animate properly (e.g., without deforming incorrectly).

The computing platform(s) 502 may be configured to communicate with one or more remote platforms 504 according to a client/server architecture, a peer-to-peer architecture, and/or other architectures. The remote platform(s) 504 may be configured to communicate with other remote platforms via computing platform(s) 502 and/or according to a client/server architecture, a peer-to-peer architecture, and/or other architectures. Users may access the system 500 hosting the shared artificial reality environment and/or personal artificial reality via remote platform(s) 504. In this way, the remote platform(s) 504 can be configured to cause output of the shared artificial reality environment on client device(s) of the remote platform(s) 504, such as via the HMD 200, HMD system 250, controllers 270a-270b, AR glasses, and/or the like. As an example, the remote platform(s) 504 can access artificial reality content and/or artificial reality applications for use in the shared artificial reality for the corresponding user(s) of the remote platform(s) 504, such as via the external resources 524.

The computing platform(s) 502, external resources 524, and remote platform(s) 504 may be in communication and/or mutually accessible via the network 150. The computing platform(s) 502 may be configured by machine-readable instructions 506. The machine-readable instructions 506 may be executed by the computing platform(s) to implement one or more instruction modules. The instruction modules may include computer program modules. The instruction modules being implemented may include one or more of sampling module 508, hair strand module 510, inflation module 512, hair mesh module 514, animation module 516, and/or other instruction modules.

As discussed herein, the sampling module 508 can determine a quantity of strands to sample from a virtual hair asset. The sampling module 508 can base this determination on how much computation capacity is available for the XR device being used to render the virtual stylistic hair movement. The sampling module 508 may sample hair strands and/or assets from a database, such as a large public dataset of realistic hair assets. The assets in the public dataset may comprise thousands of hair strands, for example. For example, data assets can include 3D hair models such as available at http://www-scf.usc.edu/~liwenhu/SHM/database.html. The sampling function performed by the sampling module 508 may enable more efficient and automatic creation of virtual hair assets compared to manual creation of animated hair objects in XR. Conventionally, an artist could use computer design software to manually create a hair mesh and a hair skeleton to the hair mesh as well as the skinning weights between the hair mesh and skeleton in order to animate hair. That is, the artist would manually create and/or modify hair animation based on considering the appearance of the hair being animated, the style of the hair, and how much flexibility in movement is desired (amount of skeleton positive correlates with flexibility). The skinning weights may be assigned during the manual design but may require manual tweaking or modification by the artist for the skinning to perform well (e.g., without undesirable stretching or deformation). In contrast, the subject disclosure provides advantages in animating stylized virtual hair objects over this manual approach. For example, the subject disclosure discloses creating virtual hair assets/objects automatically from a few number of virtual hair strands and preserving skinning weights which are automatically calculated without manual tweaking or modification.

For example, the sampling module 508 samples a discrete set of hair strands from which a stylistic hair mesh and applicable skinning weights can be created and calculated to automatically animated stylized virtual hair according to computationally represented physics to drive movement. In order to facilitate automatically animating such stylized virtual hair, the sampling module 508 can be configured to sample a full virtual hair asset. Such sampling may be performed to cover the dimensions of an entire virtual head, such as the head of a user representation. The full virtual hair assets may be retrieved by the sampling module 508 from a large public dataset or database, for example. This public dataset may comprise many realistic stylistic hair assets comprising thousands of hair strands. By sampling a limited set of hair strands from this public dataset according to available computational capacity, the sampling module 508 can enable automatic creation of a stylized virtual hair object in real time. This advantageously addresses the computational challenge of real time animation of thousands of hair strands (of the realistic stylistic hair assets) because the single hairs of these sampled assets represent more particles than would be computationally possible to fully move or animate.

The hair strand module 510 may control hair strands of virtual hair strand assets within the shared XR environment. The hair strand module 510 can determine the available computational capacity, runtime considerations, network/wireless connection, and/or the quantity of hair strands to be sampled by the sampling module 508. For example, the runtime considerations can define the number of particles of virtual hair it may be feasible to move or animate in real time. The hair strand module 510 can be configured to determine the amount of hair strands for the inflation module 512 to inflate, such as depending on the available computational capacity. The amount of hair strands can be the same amount as the quantity of sampled hair strands or a subset of the sampled hair strands. In general, the more detail of movement desired for animating the virtual stylized hair, the more strands that should be sampled and/or inflated by the sampling module 508 and hair strand module 510.

The inflation module 512 can inflate the quantity of hair strands that would fill a desired volume relative to the entire virtual head. For example, the inflation module 512 may be configured to inflate each sampled hair strand of a particular virtual hair asset separately. As used herein, inflation refers to increasing the volume of a hair strand to form a hair mesh that surrounds the inflated hair strand. The inflation module 512 may inflate the hair strands to cause the appearance of the hair to match the desired look of the corresponding selected hair style. The inflation performed by the inflation module 512 causes each sampled hair strand to independently control an aspect of the overall stylistic hair movement animation. That is, such individual inflation can enable skinning a corresponding hair mesh separately for each sampled hair strand for increasing flexible animation of the underlying virtual hair skeleton. As such, the inflation module 512 may inflate each hair strand separately or individually. Each individually inflated strand may be attached to a corresponding individual hair mesh. This may advantageously ensure that the inflation module 512 does not inflate two hair strands that controls the same vertex of the hair skeleton (e.g., which can effectively comprise the hair strands used to create the animated stylized virtual hair object).

The hair mesh module 514 may combine each individual hair mesh into a combined hair mesh. That is, hair mesh module 514 may compose a whole or overall mesh from many single or individual meshes. As discussed herein, the individual meshes can be in a one to one relationship with the sampled or inflated hair strands. In other words, the hair mesh module 514 can attach each inflated mesh to each inflated hair strand from the inflation module 512. Consequently, a single hair mesh area will not be moved by two different hair strands, so neither the individual hair mesh nor the combined hair mesh will be improperly or undesirably stretched in hair movement animation. The combined hair mesh can be skinned by the hair mesh module 514 to the virtual hair skeleton of the particular virtual hair asset.

For example, the skinning weights are used to combine all the individual single hair meshes to the single combined hair mesh that is skinned to the different hair strands that basically form the hair skeleton. The skinning weights can be distance based skinning weights, such as Euclidean distances, for example. In particular, the Euclidean or other distances can be calculated to find the nearest fewest particles to each hair strand and skin the corresponding hair mesh to it. Advantageously, the skinning weights used by the hair mesh module 514 may not require manual tweaking or modification. As used herein, skinning weights may refer to weights for skinning a rig (e.g., of an XR user representation) created and animated via 3D visual effects software, such as Autodesk Maya available from Autodesk, Inc. of San Rafael, CA, USA and/or the like. The skinning weights can define the process of binding a 3D hair mesh or meshes to the joint rig setup represented by the hair skeleton. The joints setup for the hair skeleton may define or influence the vertices of the virtual hair 3D animation model. Calculating the skinning weights or weight painting can be used by the hair mesh module 514 to automatically assign the respective influence each mesh of the combined single mesh has on deforming and/or animating the corresponding hair style movement. That is, the skinning weights define the extent of influence that each component hair mesh (of the combined mesh) has on the vertices of the animation model.

In general, the skinning weights can be calculated by the hair mesh module 514 such that each inflated hair strand only controls a particular vertex of the 3D animation model. As discussed above, the sampled hair strands function basically as the virtual hair skeleton. Accordingly, the combined hair mesh can be used to animate the underlying hair skeleton based on calculated skinning weights. In contrast to conventional meshes which are typically one or two parts, the combined hair mesh created by the hair mesh module 514 may have hundreds or even thousands of parts. These parts can correspond to the number of sampled or inflated hair strands, which can amount to thousands of strands as discussed above.

The animation module 516 can be configured to calculate a movement parameter to animate the particular virtual hair asset. For example, the movement parameter can define a desired type of stylistic hair movement. For example, the hair movement can be the stylized hair movement corresponding to a selected type of hair style, such as [bob, pixie, etc.]. The hair movement can be based on a few particular particles of the hair skeleton to animate the particular virtual hair assets to a computational model of physics. The animation module 516 can calculate the movement of the few sampled/inflated hair strands or a subset thereof. As such, the animation module 516 can render the whole movement of the animated stylized virtual hair asset/object. That is, the movement parameter can be determined by the animation module 516 based on the sampled hair strands (or subset thereof) instead of all particles of a conventional hair mesh. In this way, the animation module 516 can provide improved computationally efficient real time automatic animation of the stylized virtual hair compared to conventional manually created animated hair movement. The animation module 516 can use the computational model/representation of physics to efficiently move on a few hair particles/strands to obtain an entire stylized hair animation automatically from the few originally sampled hair strands. For users of XR devices, they may perceive that the whole hair of their corresponding user representations is moving together according to the corresponding stylistic hair animation without stretching in the shared XR environment.

As discussed herein, an appearance of hair stretching in the XR environment may advantageously be avoided because each vertex of the hair skeleton is controlled by the corresponding single strand. The hair movement controlled by the animation module 516 can be performed automatically in real time, and beneficially preserve the skinning weights that were calculated and used. The animation module 516 may also apply a machine learning algorithm for animation of the combined/united hair mesh. Using machine learning to animate the movement of the hair strands (skinned to the hair mesh) may realize advantages in increased computer processing and/or rendering speed. The training data used to train the machine learning algorithm or model can be accessed by the animation module 516. For example, the training data can be created via computer generated physics models. That is, the training data can comprise examples of stylized hair movement (e.g., virtual hair movements) according to the movement of different hair styles represented by the computer generated physics (e.g., computer representations of the natural laws of physics).

The animation module 516 may be used to render the shared artificial reality environment for remote platform(s) 504 via the computing platform(s) 502, for example. The hair mesh module 514 may be in communication with an XR compatible device used to access the environment such as HMDs 200, 250, or some other type of XR applicable device (e.g., XR headset). The animation module 516 may generate XR representations of various objects such as images, shapes, thumbnails, icons, portals, and/or the like. The visual rendering of elements by the animation module 516 can be 2D, 3D, or flat surfaces with stereoscopic textures to imitate 3D depth. The animation module 516 can render various virtual areas, space, and/or XR scenes such as a museum, public art space, home area, and/or the like.

In some implementations, the computing platform(s) 502, the remote platform(s) 504, and/or the external resources 524 may be operatively linked via one or more electronic communication links. For example, such electronic communication links may be established, at least in part, via the network 150 such as the Internet and/or other networks. It will be appreciated that this is not intended to be limiting, and that the scope of this disclosure includes implementations in which the computing platform(s) 502, the remote platform(s) 504, and/or the external resources 524 may be operatively linked via some other communication media.

A given remote platform 504 may include client computing devices, such as the artificial reality device 302, mobile device 304, tablet 312, personal computer 314, laptop 316, and desktop 318, which may each include one or more processors configured to execute computer program modules (e.g., the instruction modules). The computer program modules may be configured to enable an expert or user associated with the given remote platform 504 to interface with the system 500 and/or external resources 524, and/or provide other functionality attributed herein to remote platform(s) 504. By way of non-limiting example, a given remote platform 504 and/or a given computing platform 502 may include one or more of a server, a desktop computer, a laptop computer, a handheld computer, a tablet computing platform, a NetBook, a Smartphone, a gaming console, and/or other computing platforms. The external resources 524 may include sources of information outside of the system 500, external entities participating with the system 500, and/or other resources. For example, the external resources 524 may include externally designed XR elements and/or XR applications designed by third parties. In some implementations, some or all of the functionality attributed herein to the external resources 524 may be provided by resources included in system 500.

The computing platform(s) 502 may include the electronic storage 526, a processor such as the processors 110, and/or other components. The computing platform(s) 502 may include communication lines, or ports to enable the exchange of information with a network and/or other computing platforms. Illustration of the computing platform(s) 502 in FIG. 5 is not intended to be limiting. The computing platform(s) 502 may include a plurality of hardware, software, and/or firmware components operating together to provide the functionality attributed herein to the computing platform(s) 502. For example, the computing platform(s) 502 may be implemented by a cloud of computing platforms operating together as the computing platform(s) 502.

The electronic storage 526 may comprise non-transitory storage media that electronically stores information, such as virtual hair assets and stylistic animation data (e.g., 3D animation hair rigs). The electronic storage media of the electronic storage 526 may include one or both of system storage that is provided integrally (i.e., substantially nonremovable) with computing platform(s) 502 and/or removable storage that is removably connectable to computing platform(s) 502 via, for example, a port (e.g., a USB port, a firewire port, etc.) or a drive (e.g., a disk drive, etc.). The electronic storage 526 may include one or more of optically readable storage media (e.g., optical disks, etc.), magnetically readable storage media (e.g., magnetic tape, magnetic hard drive, floppy drive, etc.), electrical chargebased storage media (e.g., EEPROM, RAM, etc.), solid-state storage media (e.g., flash drive, etc.), and/or other electronically readable storage media. The electronic storage 526 may include one or more virtual storage resources (e.g., cloud storage, a virtual private network, and/or other virtual storage resources). The electronic storage 526 may store software algorithms, information determined by the processor(s) 110, information received from computing platform(s) 502, information received from the remote platform(s) 504, and/or other information that enables the computing platform(s) 502 to function as described herein.

The processor(s) 110 may be configured to provide information processing capabilities in the computing platform(s) 502. As such, the processor(s) 110 may include one or more of a digital processor, an analog processor, a digital circuit designed to process information, an analog circuit designed to process information, a state machine, and/or other mechanisms for electronically processing information. Although the processor(s) 110 is shown in FIG. 1 as a single entity, this is for illustrative purposes only. In some implementations, the processor(s) 110 may include a plurality of processing units. These processing units may be physically located within the same device, or the processor(s) 110 may represent processing functionality of a plurality of devices operating in coordination. Processor(s) 110 may be configured to execute modules 508, 510, 512, 514, 516, and/or other modules. Processor(s) 110 may be configured to execute modules 508, 510, 512, 514, 516, and/or other modules by software; hardware; firmware; some combination of software, hardware, and/or firmware; and/or other mechanisms for configuring processing capabilities on the processor(s) 110. As used herein, the term "module" may refer to any component or set of components that perform the functionality attributed to the module. This may include one or more physical processors during execution of processor readable instructions, the processor readable instructions, circuitry, hardware, storage media, or any other components.

It should be appreciated that although the modules 508, 510, 512, 514, and/or 516 are illustrated in FIG. 5 as being implemented within a single processing unit, in implementations in which the processor(s) 110 includes multiple processing units, one or more of the modules 508, 510, 512, 514, and/or 516 may be implemented remotely from the other modules. The description of the functionality provided by the different modules 508, 510, 512, 514, and/or 516 described herein is for illustrative purposes, and is not intended to be limiting, as any of the modules 508, 510, 512, 514, and/or 516 may provide more or less functionality than is described. For example, one or more of the modules 508, 510, 512, 514, and/or 516 may be eliminated, and some or all of its functionality may be provided by other ones of the modules 508, 510, 512, 514, and/or 516. As another example, the processor(s) 110 may be configured to execute one or more additional modules that may perform some or all of the functionality attributed below to one of the modules 508, 510, 512, 514, and/or 516.

The techniques described herein may be implemented as method(s) that are performed by physical computing device(s); as one or more non-transitory computer-readable storage media storing instructions which, when executed by computing device(s), cause performance of the method(s); or, as physical computing device(s) that are specially configured with a combination of hardware and software that causes performance of the method(s).

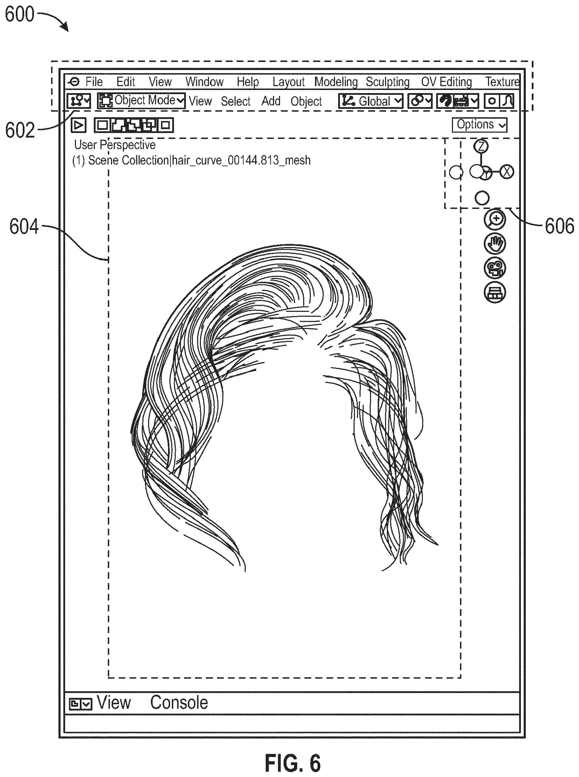

FIG. 6 is a visual rendering 600 illustrating an example virtual animated hair asset with which aspects of the subject technology can be implemented. 3D animation rig can be established, such as in Maya or another digital asset creation or computer animation/graphics software, in order to instantiate a virtual hair object 604 for a shared XR environment. The 3D animation software may include a user interface that has a user toolbar 602 which a user can interact with to select options and functionalities for computer animation and/or graphics. The user toolbar 602 can include an object mode to view, control, and modify the virtual hair object 604. The virtual hair object 604 may be a 3D animation that exists along the three axes X, Y, Z represented by the axis map 606. In addition, the user toolbar 602 may be configured for the user to manage or control one or more aspects of the automated creation of animated stylized virtual hair objects as disclosed in the subject disclosure. As shown in FIG. 6, the virtual hair object 604 may comprise a quantity of sampled strands of virtual hair. The sampled strands may represent a small portion of a sampled full virtual hair asset comprising thousands of strands, as described herein. All of the sampled strands (or a subset thereof) may function as leading or driving hair with respect to the stylistic hair movement. By attaching slave hairs to the leading hair strands in a master to slave relationship, this may beneficially reduce computational complexity. FIG. 6 also illustrates a slight inflation of the sampled hair strands.

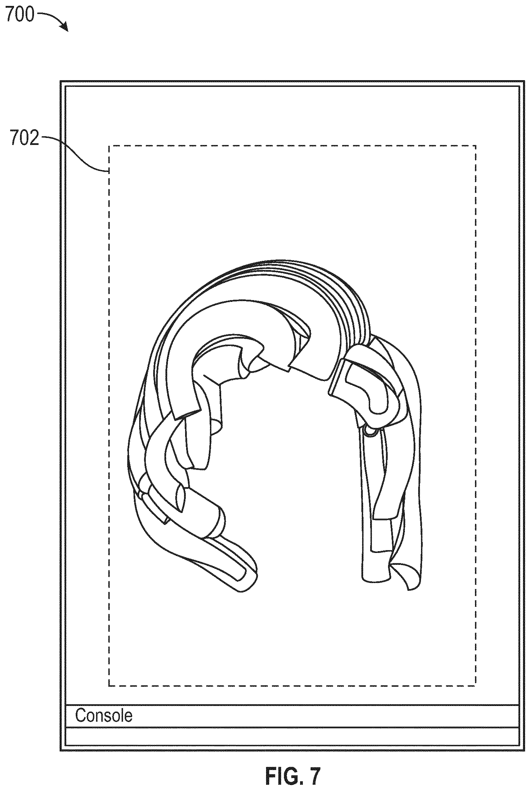

FIG. 7 is another visual rendering 700 illustrating inflated virtual hair strands for the example virtual animated hair asset, according to certain aspects of the present disclosure. The virtual hair object 702 may comprise fully inflated hair strands that were initially sampled from a hair asset. The sampled hair asset can be from a public database or dataset, for example. Inflation of the strands of the virtual hair object 702 can involve creating an inflated volume that is positioned to surround a corresponding stylistic hair mesh. Each of the initially sampled virtual hair strands can be looped through in an iterative fashion such that each hair strand is inflated to create a hair mesh. Each created hair mesh can be visualized as a surrounding volume that encompasses its corresponding hair strand. The appearances of the hair meshes may be customized or modified via applicable computer animation or graphics software. Subsequently, skinning weights can be calculated for each of the created/inflated hair mesh based on vertex distances for neighboring vertices. The skinning weights define the respective influence each skinned hair mesh part/component has on the overall stylistic hair animation movement. The individual skinned hair mesh parts may be combined into a single united hair mesh while preserving the calculated skinning weights. Thus, an automated manner of skinning hair meshes to hair strands can be achieved without undesirable stretching in the overall animated stylistic hair movement. As such, the stylized leading or driving hair strands (via the united mesh) can be moved according to a computer representation of the laws of physics as high quality animation in a computationally efficient manner.

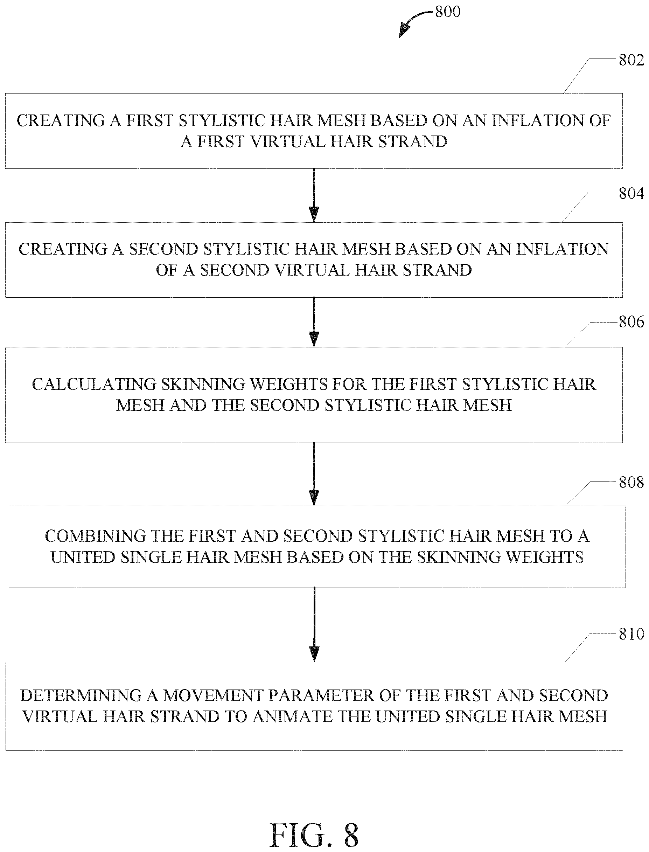

FIG. 8 illustrates an example flow diagram (e.g., process 800) for creation of animated virtual hair in a shared artificial reality environment, according to certain aspects of the disclosure. For explanatory purposes, the example process 800 is described herein with reference to one or more of the figures above. Further for explanatory purposes, the steps of the example process 800 are described herein as occurring in serial, or linearly. However, multiple instances of the example process 800 may occur in parallel. For purposes of explanation of the subject technology, the process 800 will be discussed in reference to one or more of the figures above.

At step 802, a first stylistic hair mesh may be created based on an inflation of a first virtual hair strand. According to an aspect, creating the first stylistic hair mesh comprises creating an inflated volume that is positioned to surround the first stylistic hair mesh. At step 804, a second stylistic hair mesh may be created based on an inflation of a second virtual hair strand. According to an aspect, creating the second stylistic hair mesh comprises determining a quantity of sampled virtual hair strands according to a volume of a virtual head. At step 806, skinning weights for the first stylistic hair mesh and the second stylistic hair mesh may be calculated. According to an aspect, calculating the skinning weights comprises determining a one to one relationship between each of the first virtual hair strand and the second virtual hair strand and each corresponding vertex. According to an aspect, calculating the skinning weights comprises calculating Euclidean distances corresponding to the first stylistic hair mesh and the second stylistic hair mesh. Such calculation also comprises determining a distance of vertices for the first stylistic hair mesh and the second stylistic hair mesh.

At step 808, the first stylistic hair mesh and the second stylistic hair mesh to a united single hair mesh may be combined. At step 810, a movement parameter of the first virtual hair strand and the second virtual hair strand may be determined to animate the united single hair mesh. According to an aspect, determining the movement parameter comprises calculating an extent of movement of the first virtual hair strand and the second virtual hair strand based on the skinning weights. According to an aspect, determining the movement parameter comprises determining training data comprising a plurality of physics based virtual hair movements. As an example, the animated virtual hair is represented as a subset of physical particles according to a physics model. According to an aspect, the process 800 may further include sampling a first virtual hair strand and a second virtual hair strand from a virtual hair asset. According to an aspect, the process 800 may further include inflating the first virtual hair strand and the second virtual hair strand based on a volume of a virtual head. According to an aspect, the process 800 may further include preserving the skinning weights for the first stylistic hair mesh and the second stylistic hair mesh for animation of the united single hair mesh.

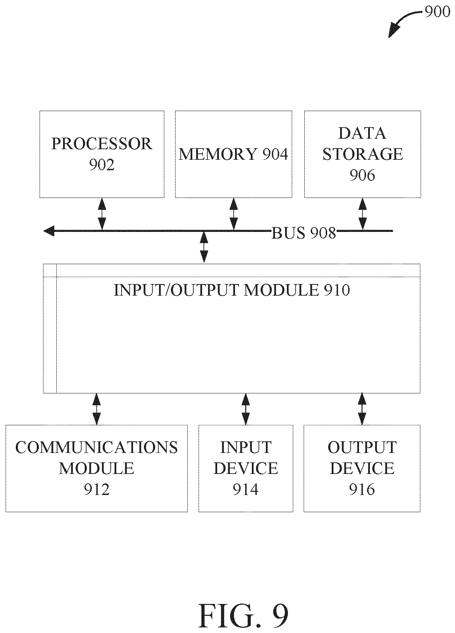

FIG. 9 is a block diagram illustrating an exemplary computer system 900 with which aspects of the subject technology can be implemented. In certain aspects, the computer system 900 may be implemented using hardware or a combination of software and hardware, either in a dedicated server, integrated into another entity, or distributed across multiple entities.

The computer system 900 (e.g., server and/or client) includes a bus 908 or other communication mechanism for communicating information, and a processor 902 coupled with the bus 908 for processing information. By way of example, the computer system 900 may be implemented with one or more processors 902. Each of the one or more processors 902 may be a general-purpose microprocessor, a microcontroller, a Digital Signal Processor (DSP), an Application Specific Integrated Circuit (ASIC), a Field Programmable Gate Array (FPGA), a Programmable Logic Device (PLD), a controller, a state machine, gated logic, discrete hardware components, or any other suitable entity that can perform calculations or other manipulations of information.

The computer system 900 can include, in addition to hardware, code that creates an execution environment for the computer program in question, e.g., code that constitutes processor firmware, a protocol stack, a database management system, an operating system, or a combination of one or more of them stored in an included memory 904, such as a Random Access Memory (RAM), a flash memory, a Read-Only Memory (ROM), a Programmable Read-Only Memory (PROM), an Erasable PROM (EPROM), registers, a hard disk, a removable disk, a CD-ROM, a DVD, or any other suitable storage device, coupled to bus 908 for storing information and instructions to be executed by processor 902. The processor 902 and the memory 904 can be supplemented by, or incorporated in, special purpose logic circuitry.

The instructions may be stored in the memory 904 and implemented in one or more computer program products, i.e., one or more modules of computer program instructions encoded on a computer-readable medium for execution by, or to control the operation of, the computer system 900, and according to any method well-known to those of skill in the art, including, but not limited to, computer languages such as data-oriented languages (e.g., SQL, dBase), system languages (e.g., C, Objective-C, C++, Assembly), architectural languages (e.g., Java, .NET), and application languages (e.g., PHP, Ruby, Perl, Python). Instructions may also be implemented in computer languages such as array languages, aspect-oriented languages, assembly languages, authoring languages, command line interface languages, compiled languages, concurrent languages, curly-bracket languages, dataflow languages, data-structured languages, declarative languages, esoteric languages, extension languages, fourth-generation languages, functional languages, interactive mode languages, interpreted languages, iterative languages, list-based languages, little languages, logic-based languages, machine languages, macro languages, metaprogramming languages, multiparadigm languages, numerical analysis, non-English-based languages, object-oriented class-based languages, object-oriented prototype-based languages, off-side rule languages, procedural languages, reflective languages, rule-based languages, scripting languages, stack-based languages, synchronous languages, syntax handling languages, visual languages, wirth languages, and xml-based languages. Memory 904 may also be used for storing temporary variable or other intermediate information during execution of instructions to be executed by the processor 902.

A computer program as discussed herein does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, subprograms, or portions of code). A computer program can be deployed to be executed on one computer or on multiple computers that are located at one site or distributed across multiple sites and interconnected by a communication network. The processes and logic flows described in this specification can be performed by one or more programmable processors executing one or more computer programs to perform functions by operating on input data and generating output.

The computer system 900 further includes a data storage device 906 such as a magnetic disk or optical disk, coupled to bus 908 for storing information and instructions. The computer system 900 may be coupled via input/output module 910 to various devices. The input/output module 910 can be any input/output module. Exemplary input/output modules 910 include data ports such as USB ports. The input/output module 910 is configured to connect to a communications module 912. Exemplary communications modules 912 include networking interface cards, such as Ethernet cards and modems. In certain aspects, the input/output module 910 is configured to connect to a plurality of devices, such as an input device 914 and/or an output device 916. Exemplary input devices 914 include a keyboard and a pointing device, e.g., a mouse or a trackball, by which a user can provide input to the computer system 900. Other kinds of input devices can be used to provide for interaction with a user as well, such as a tactile input device, visual input device, audio input device, or brain-computer interface device. For example, feedback provided to the user can be any form of sensory feedback, e.g., visual feedback, auditory feedback, or tactile feedback, and input from the user can be received in any form, including acoustic, speech, tactile, or brain wave input. Exemplary output devices 916 include display devices such as an LCD (liquid crystal display) monitor, for displaying information to the user.

According to one aspect of the present disclosure, the above-described systems can be implemented using a computer system 900 in response to the processor 902 executing one or more sequences of one or more instructions contained in the memory 904. Such instructions may be read into memory 904 from another machine-readable medium, such as data storage device 906. Execution of the sequences of instructions contained in the main memory 904 causes the processor 902 to perform the process steps described herein. One or more processors in a multi-processing arrangement may also be employed to execute the sequences of instructions contained in the memory 904. In alternative aspects, hard-wired circuitry may be used in place of or in combination with software instructions to implement various aspects of the present disclosure. Thus, aspects of the present disclosure are not limited to any specific combination of hardware circuitry and software.

Various aspects of the subject matter described in this specification can be implemented in a computing system that includes a back end component, e.g., such as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. The communication network can include, for example, any one or more of a LAN, a WAN, the Internet, and the like. Further, the communication network can include, but is not limited to, for example, any one or more of the following network topologies, including a bus network, a star network, a ring network, a mesh network, a star-bus network, tree or hierarchical network, or the like. The communications modules can be, for example, modems or Ethernet cards.

The computer system 900 can include clients and servers. A client and server are generally remote from each other and typically interact through a communication network. The relationship of client and server arises by virtue of computer programs running on the respective computers and having a client-server relationship to each other. The computer system 900 can be, for example, and without limitation, a desktop computer, laptop computer, or tablet computer. The computer system 900 can also be embedded in another device, for example, and without limitation, a mobile telephone, a PDA, a mobile audio player, a Global Positioning System (GPS) receiver, a video game console, and/or a television set top box.

The term "machine-readable storage medium" or "computer-readable medium" as used herein refers to any medium or media that participates in providing instructions to the processor 902 for execution. Such a medium may take many forms, including, but not limited to, non-volatile media, volatile media, and transmission media. Non-volatile media include, for example, optical or magnetic disks, such as the data storage device 906. Volatile media include dynamic memory, such as the memory 904. Transmission media include coaxial cables, copper wire, and fiber optics, including the wires that comprise the bus 908. Common forms of machine-readable media include, for example, floppy disk, a flexible disk, hard disk, magnetic tape, any other magnetic medium, a CD-ROM, DVD, any other optical medium, punch cards, paper tape, any other physical medium with patterns of holes, a RAM, a PROM, an EPROM, a FLASH EPROM, any other memory chip or cartridge, or any other medium from which a computer can read. The machine-readable storage medium can be a machine-readable storage device, a machine-readable storage substrate, a memory device, a composition of matter effecting a machine-readable propagated signal, or a combination of one or more of them.

As the user computing system 900 reads XR data and provides an artificial reality environment, information may be read from the XR data and stored in a memory device, such as the memory 904. Additionally, data from the memory 904 servers accessed via a network, the bus 908, or the data storage 906 may be read and loaded into the memory 904. Although data is described as being found in the memory 904, it will be understood that data does not have to be stored in the memory 904 and may be stored in other memory accessible to the processor 902 or distributed among several media, such as the data storage 906.

The techniques described herein may be implemented as method(s) that are performed by physical computing device(s); as one or more non-transitory computer-readable storage media storing instructions which, when executed by computing device(s), cause performance of the method(s); or, as physical computing device(s) that are specially configured with a combination of hardware and software that causes performance of the method(s).

As used herein, the phrase "at least one of" preceding a series of items, with the terms "and" or "or" to separate any of the items, modifies the list as a whole, rather than each member of the list (i.e., each item). The phrase "at least one of" does not require selection of at least one item; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

To the extent that the terms "include," "have," or the like is used in the description or the claims, such term is intended to be inclusive in a manner similar to the term "comprise" as "comprise" is interpreted when employed as a transitional word in a claim. The word "exemplary" is used herein to mean "serving as an example, instance, or illustration." Any embodiment described herein as "exemplary" is not necessarily to be construed as preferred or advantageous over other embodiments.

A reference to an element in the singular is not intended to mean "one and only one" unless specifically stated, but rather "one or more." All structural and functional equivalents to the elements of the various configurations described throughout this disclosure that are known or later come to be known to those of ordinary skill in the art are expressly incorporated herein by reference and intended to be encompassed by the subject technology. Moreover, nothing disclosed herein is intended to be dedicated to the public regardless of whether such disclosure is explicitly recited in the above description.

While this specification contains many specifics, these should not be construed as limitations on the scope of what may be claimed, but rather as descriptions of particular implementations of the subject matter. Certain features that are described in this specification in the context of separate examples can also be implemented in combination in a single example. Conversely, various features that are described in the context of a single example can also be implemented in multiple examples separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

The subject matter of this specification has been described in terms of particular aspects, but other aspects can be implemented and are within the scope of the following claims. For example, while operations are depicted in the drawings in a particular order, this should not be understood as requiring that such operations be performed in the particular order shown or in sequential order, or that all illustrated operations be performed to achieve desirable results. The actions recited in the claims can be performed in a different order and still achieve desirable results. As one example, the processes depicted in the accompanying figures do not necessarily require the particular order shown, or sequential order, to achieve desirable results. In certain circumstances, multitasking and parallel processing may be advantageous. Moreover, the separation of various system components in the aspects described above should not be understood as requiring such separation in all aspects, and it should be understood that the described program components and systems can generally be integrated together in a single software product or packaged into multiple software products. Other variations are within the scope of the following claims.

## Claims

1. A computer-implemented method for creation of animated virtual hair in a shared artificial reality environment, the method comprising:
creating a first stylistic hair mesh based on an inflation of a first virtual hair strand;
creating a second stylistic hair mesh based on an inflation of a second virtual hair strand;
calculating skinning weights for the first stylistic hair mesh and the second stylistic hair mesh;
combining, based on the skinning weights, the first stylistic hair mesh and the second stylistic hair mesh to a united single hair mesh; and
determining a movement parameter of the first virtual hair strand and the second virtual hair strand to animate the united single hair mesh.

2. The computer-implemented method of claim 1, wherein creating the first stylistic hair mesh comprises creating an inflated volume that is positioned to surround the first stylistic hair mesh.

3. The computer-implemented method of claim 1 or 2, wherein creating the second stylistic hair mesh comprises determining a quantity of sampled virtual hair strands according to a volume of a virtual head.

4. The computer-implemented method of any preceding claim, wherein calculating the skinning weights comprises determining a one to one relationship between each of the first virtual hair strand and the second virtual hair strand and each corresponding vertex.

5. The computer-implemented method of any preceding claim, wherein calculating the skinning weights comprises:
calculating Euclidean distances corresponding to the first stylistic hair mesh and the second stylistic hair mesh; and
determining a distance of vertices for the first stylistic hair mesh and the second stylistic hair mesh.

6. The computer-implemented method of any preceding claim, wherein determining the movement parameter comprises calculating an extent of movement of the first virtual hair strand and the second virtual hair strand based on the skinning weights.

7. The computer-implemented method of any preceding claim, wherein determining the movement parameter comprises:
determining training data comprising a plurality of physics based virtual hair movements; and
applying a machine learning algorithm based on the training data for animation of the united single hair mesh.

8. The computer-implemented method of any preceding claim, wherein the animated virtual hair is represented as a subset of physical particles according to a physics model.

9. The computer-implemented method of any preceding claim, further comprising:
sampling a first virtual hair strand and a second virtual hair strand from a virtual hair asset; and
inflating the first virtual hair strand and the second virtual hair strand based on a volume of a virtual head.

10. The computer-implemented method of any preceding claim, further comprising preserving the skinning weights for the first stylistic hair mesh and the second stylistic hair mesh for animation of the united single hair mesh.

11. A system for creation of animated virtual hair in a shared artificial reality environment, comprising:
one or more processors; and
a memory comprising instructions stored thereon, which when executed by the one or more processors, causes the one or more processors to perform the method of any preceding claim.

12. A computer-readable storage medium comprising instructions stored thereon, which when executed by one or more processors, cause the one or more processors to perform the method of any of claims 1 to 10.

13. A computer program product comprising instructions which, when the program is executed by a computer, cause the computer to perform the method of any of claims 1 to 10.
